# EUROPEAN PATENT APPLICATION

(11) **EP 4 668 776 A1**
(43) Date of publication of application: **24.12.2025**
(21) Application number: 25180634.5
(22) Date of filing: 04.06.2025
(51) Int. Cl.: H04R 1/40, H04M 9/08, H04R 3/00, H04R 25/00, G10L 21/0216, G10L 21/0208

(54) **ACTIVE ECHO CANCELLER FOR A HEARING DEVICE**

(30) Priority: 21.06.2024 EP 24183721
(71) Applicant: EPOS Group A/S, 2750 Ballerup (DK)
(72) Inventor: HANSEN, Anders Røser, DK-2750 Ballerup (DK); FELDT, Svend, DK-2750 Ballerup (DK); PETRI, Stig, 2450 Copenhagen SV (DK)
(74) Representative: Demant

(57) **Abstract**

A hearing device is disclosed. The hearing device comprises one or more processors, an input interface, and an output interface. The hearing device filters a first filter input signal to provide a first filtered signal, where filtering is performed to estimate an echo in a first input signal. The hearing device combines a first filtered output signal with the first input signal to provide a first output signal, the first filtered output signal is based on the first filtered signal. The hearing device filters a second filter input signal to provide a second filtered signal, where the filtering is performed to attenuate a near-end sound. The hearing device combines the second filtered output signal with the first filtered output signal to provide an update signal, where the second filtered output signal is based on the second filtered signal. The hearing device updates one or more filter coefficients based on the update signal.

## Description

### TECHNICAL FIELD

The present application relates to the field of hearing devices.

### BACKGROUND

Acoustic echo cancellation is concerned about removing acoustic echo from microphone signals. Echo usually arises due to a loudspeaker playing a signal close to a microphone on a given device, where a near-end user of a device may be listening to the loudspeaker and speaking into a microphone, to thereby communicate with a far-end user.

It is highly undesirable to transmit back any part of the signal played by the loudspeaker received on the microphone, as this will be heard as an echo by the far-end user.

In an acoustic echo canceller, an adaptive filter estimating an acoustic transfer function is adjusted using the loudspeaker signal, the microphone signal, and the assumption that a so called "error" signal should be equal to zero when the device is in an echo scenario.

Since the adaptive filter is updated using the error signal, any noise or own voice coming from the near end user of the device being a part of the microphone signal, will be noise on the adaptation, and will result in poorer echo cancelling performance. Usually this is handled by slowing down adaptation in these situations, resulting in a reduced ability to track changes in the transfer function, i.e., timing-based constraints are placed on the echo canceller adaptation.

### SUMMARY

According to a first aspect of the present disclosure a hearing device is provided. The hearing device comprises an output interface configured to output a first sound to a user of the hearing device based on a far-end signal. The hearing device comprises an input interface configured to provide a plurality of input audio signals indicative of the first sound and a near-end sound. The hearing device comprises one or more processors. The one or more processors are configured to receive the plurality of input audio signals. The one or more processors are configured to receive the far-end signal. The one or more processors are configured to filter using a first filter a first filter input signal to provide a first filtered signal. The first filter input signal is based on the far-end signal. The first filter is configured to estimate an echo signal resulting from the first sound in a first input signal. The first input signal is based on the plurality of input audio signals. The one or more processors are configured to combine a first filtered output signal with the first input signal to provide a first output signal. The first filtered output signal is based on the first filtered signal. The one or more processors are configured to filter using a second filter a second filter input signal to provide a second filtered signal. The second filter input signal is based on the plurality of input audio signals. The second filter is configured to attenuate the near-end sound. The one or more processors are configured to combine the second filtered output signal with the first filtered output signal to provide an update signal. The second filtered output signal is based on the second filtered signal. The one or more processors are configured to update one or more first filter coefficients of the first filter based on the update signal.

Consequently, an improved hearing device is provided which overcomes or at least alleviates the problems of the prior art. The presented hearing device provides an improved acoustic echo canceller since the adaptive first filter is updated based on a signal where noise or own voice coming from the near-end user of the device is attenuated, which would normally be noise on the adaptation, and would result in poorer echo cancelling performance.

In an embodiment the hearing device is a hearing aid, a headset, a video bar, one or more earbuds, or a speakerphone. The hearing device may be embodied as a hearing device to be worn over the ear of a user, e.g., an on-ear-headset. The hearing device may be embodied as a hearing device to be worn in the ear of a user, e.g., one or more earbuds, a hearing aid, a RIE hearing aid, an ITE hearing aid, etc. The hearing device may be embodied as a device not configured to be worn by a user such as a video bar, or a speakerphone.

The output interface may be for providing a stimulus perceived by the user as a sound based on a processed electric signal. The output interface may comprise an output transducer. The output transducer may comprise one or more loudspeakers. The one or more loudspeakers may be for providing a sound to the user of the hearing device. The sound may be based on a processed electric signal. The output transducer may comprise a vibrator for providing the stimulus as mechanical vibration of a skull bone to the user. The output interface may comprise a wireless interface for transmitting an audio signal to a far-end communication partner e.g. via a network, or in a telephone mode of operation.

The far-end signal may be understood as a signal originating from a device communicatively connected to the hearing device. The far-end signal may be a signal forming part of a teleconference, e.g., the far-end signal being generated by a far-end device picking up sound at a far-end location and transmitting it to the hearing device. The far-end signal may be a signal comprising speech from a far-end party. The hearing device may be configured to receive the far-end signal via a wired or a wireless connection.

The first sound may be understood as the sound resulting from the far-end signal being output by the output interface. The first sound may be understood as the sound resulting from a processed version of the far-end signal being output by the output interface.

The input interface may be for providing an electric input signal representing sound. The input interface may comprise an input transducer, e.g., a microphone, for converting an input sound to an electric input signal. The input interface may comprise a wireless interface for receiving a wireless signal comprising or representing sound and for providing an electric input signal representing said sound. The input interface may be configured to provide a plurality of input audio signals indicative of the first sound and a near-end sound. The electric input signal may form part of the plurality of input audio signals.

The near-end sound may be understood as sound originating from an environment in which the hearing device is located. The near-end sound may be meant to form part of a teleconference, e.g., speech to be transmitted to a far-end device. The near-end sound may comprise speech from a user of the hearing device. The near-end sound may comprise noise from an environment in which the hearing aid is situated. The near-end sound may comprise speech from one or more persons not being a user of the hearing device.

The plurality of input audio signals may be understood as audio signals comprising a near-end sound and a transformed version of the first sound output by the output interface. The plurality of input audio signals may be viewed as a linear combination of the near-end sound and a transformed version of the first sound. The transformed version of the first sound may be determined by a transfer function modelling the changes the first sound undergoes before being picked up by the input interface.

The first sound after being output by the output interface undergoes several changes such as linear and nonlinear changes and additive noise, consequently, the sound picked-up by the input interface will merely be indicative of the first sound and not a copy of the first sound, thus, the first sound picked-up by the input interface may be denoted as a transformed or modulated version of the first sound.

The one or more processors may refer to a device or integrated circuitry that performs operations on data, instructions, or signals. The one or more processors may include one or more processing units, such as central processing units (CPUs), graphics processing units (GPUs), digital signal processors (DSPs), or any combination thereof. The operations performed by the one or more processors may include, but are not limited to, arithmetic, logical, and control functions. The one or more processors may include various components such as registers, caches, and buses to facilitate data processing and communication within the hearing device. The one or more processors may be implemented using various technologies, including semiconductor fabrication processes, and may be configured for specific applications or tasks.

The one or more signal processors may be adapted to provide a frequency dependent gain according to a user's particular needs. Some or all signal processing carried out by the one or more signal processors may be conducted in the frequency domain, in which case the hearing aid comprises appropriate analysis and synthesis filter banks. Some or all signal processing carried out by the one or more signal processors may be conducted in the time domain.

The input interface may comprise a transform unit for converting a time domain signal to a signal in the transform domain (e.g., frequency domain or Laplace domain, Z transform, wavelet transform, etc.). The transform unit may be constituted by or comprise a TF-conversion unit for providing a time-frequency representation of an input signal, e.g., the plurality of input audio signals. The time-frequency representation may comprise an array or map of corresponding complex or real values of the signal in question in a particular time and frequency range. The TF conversion unit may comprise a filter bank for filtering an input signal and providing a number of output signals each comprising a distinct frequency range of the input signal. The TF conversion unit may comprise a Fourier transformation unit (e.g., a Discrete Fourier Transform (DFT) algorithm, or a Short Time Fourier Transform (STFT) algorithm, or similar) for converting a time variant input signal to a signal in the frequency domain.

A filter may refer to a processing block designed to selectively modify the properties of acoustic signals passing through it. The filter may be configured to attenuate or amplify specific frequency components of the acoustic signal, alter its phase characteristics, or modify its spatial distribution. The filter can be implemented using various techniques, such as mechanical structures, electronic circuits, or digital signal processing algorithms. The design of the filter may be tailored to achieve specific performance objectives, such as noise reduction, frequency shaping, spatial focusing, or feedback control, depending on the intended application.

The first filter may estimate the echo signal resulting from the first sound in the first input signal by estimating how the far-end signal is modulated by the near-end environment before it is picked up by the input interface. The first filter may estimate the echo signal resulting from the first sound in the first input signal by estimating an acoustical transfer function between the output interface and the input interface. The filtering performed by the first filter may comprise convolving the first filter input signal or a processed version of the first filter input signal with an estimated acoustic transfer function. The filtering performed by the first filter may comprise combining the first filter input signal with the estimated acoustic transfer function. The filtering of the first filter input signal results in the first filtered signal.

The first filter input signal may be the far-end signal. The first filter input signal may be a processed version of the far-end signal. The first filter input signal may be an up sampled or down sampled version of the far-end signal.

In an embodiment the first filter is configured to estimate the acoustic transfer function from the output interface to the input interface.

The acoustic transfer function may refer to a mathematical representation of the relationship between the first sound and the plurality of input audio signals indicative of the first sound and a near-end sound. The acoustic transfer function may describe the modulation the first sound undergoes before being picked up by the input interface, such as changes to amplitude, phase, frequency, or spatial distribution. The acoustic transfer function may encompass various parameters, including but not limited to attenuation, distortion, delay, and frequency response, and can be expressed in the time domain, frequency domain, or both. The acoustic transfer function may be expressed as a room transfer function.

The first filtered output signal may be viewed as an estimate of the transformed first sound obtained by the input interface.

The first filter may be configured to attenuate or amplify specific frequency components of the first filter input signal, alter its phase characteristics, or modify its spatial distribution. The first filter can be implemented using various techniques, such as mechanical structures, electronic circuits, or digital signal processing algorithms.

The one or more processors may combine the first filtered output signal with the first input signal by subtracting the first filtered output signal from the first input signal. The one or more processors may combine the first filtered output signal with the first input signal by linearly combining the first filtered output signal with the first input signal. The one or more processors combines the first filtered output signal with the first input signal to provide the first output signal.

The first filtered output signal may be the first filtered signal. The first filtered output signal may be a processed version of the first filtered signal. The first filtered output signal may be a weighted version of the first filtered signal. The first filtered output signal may be the first filtered signal having undergone additional filtering and/or other additional processing.

The first input signal is based on the plurality of input audio signals. The first input signal may be one or more input audio signal signals selected from the plurality of input audio signals. The first input signal may be a reference microphone signal selected from the plurality of input audio signals, i.e., one microphone of the input interface may be assigned as a reference microphone, and the signal obtained by the reference microphone may be called the reference microphone signal. The first input signal may be a processed version of the plurality of input audio signals. The first input signal may be a beamformed signal determined based on the plurality of input audio signals.

The filtering performed by the second filter may be carried out to estimate the echo signal of the first sound picked up by the input interface. The filtering performed by the second filter may comprise separating the near-end sound from the plurality of input audio signals and removing the near-end sound from the plurality of input audio signals. The filtering performed by the second filter may comprise attenuating the near-end sound from the plurality of input audio signal. The attenuation of the near-end sound may be carried out by machine learning or similar methods, a more in-depth explanation of source separation methods is provided in Vincent, Emmanuel, Tuomas Virtanen, and Sharon Gannot, eds. Audio source separation and speech enhancement. John Wiley & Sons, 2018*.* The attenuation of the near-end sound may be carried out by beamforming.

The second filter input signal may be the plurality of audio input signals. The second filter input signal may be processed versions of the plurality of audio input signals. The first filter input signal may be an up sampled or down sampled versions of the plurality of audio input signals. The second filter input signal may be one or more audio signals of the plurality of audio input signals.

The one or more processors may be configured to combine the second filtered output signal with the first filtered output signal by subtracting the second filtered output signal from the first filtered output signal to provide the update signal. The one or more processors may be configured to combine the second filtered output signal with the first filtered output signal by linearly combining the second filtered output signal with the first filtered output signal to provide the update signal.

The second filtered output signal may be the second filtered signal. The second filtered output signal may be a processed version of the second filtered signal.

The update signal may be viewed as an error signal. The one or more processors may be configured to update one or more first filter coefficients of the first filter by minimizing the update signal. The one or more processors may be configured to update one or more first filter coefficients by utilizing one or more of the following algorithms least means squares (LMS), normalized least mean squares (NLMS), or recursive least squares (RLS).

The one or more processors may update one or more first filter coefficients of the first filter based on the update signal as following, the first filter may be initialized with filter coefficients w(n). The initialized filter coefficients may be predetermined by audio engineers in a factory setting. The initialized filter coefficients may have been determined from a previous update process. The initialized filter coefficients may have been learned by one or more machine learning algorithms. The filter may be initialized with a step size parameter *µ*. The step size parameter may be a predetermined parameter. The step size parameter may determine a rate of convergence. The second filtered output signal may then be determined as an input signal *x*(*n*). The first filtered output signal may be determined as the output signal *y*(*n*). The error signal *e*(*n*) may then be determined as the difference between the input signal and the output signal *e*(*n*)=*x*(*n*)-*y*(*n*). The error signal in the presented example is the update signal. The one or more first filter coefficients may then be updated using the LMS algorithm *w*(*n+*1)*=w*(*n*)+*µ·e*(*n*)·*x*(*n*), where *w*(*n*+1) denotes the updated filter coefficients. The step of updating the one or more first filter coefficients may be repeated for a certain number of iterations, or until a predetermined level of convergence on the error signal has been reached.

The input interface and/or the output interface may comprise an analogue-to-digital (AD) converter to digitize an analogue input, e.g., from an input transducer, such as a microphone, with a predefined sampling rate, e.g., 20 kHz. The input interface and/or the output interface may comprise a digital-to-analogue (DA) converter to convert a digital signal to an analogue output signal, e.g., for being presented to a user via an output transducer.

The hearing device may comprise a wireless interface configured to receive and/or transmit an electromagnetic signal in the radio frequency range 3 kHz to 300 GHz. The wireless interface may comprise a transceiver, and/or a transmitter, and/or a receiver. The hearing device may be configured to receive the far-end signal via the wireless interface.

The hearing device may comprise antenna and transceiver circuitry allowing a wireless link to an entertainment device (e.g., a TV-set), a communication device (e.g., a telephone), a wireless microphone, an external processing device, or another hearing device, etc. The hearing device may thus be configured to wirelessly receive a direct electric input signal from another device. Likewise, the hearing device may be configured to wirelessly transmit a direct electric output signal to another device. The direct electric input or output signal may represent or comprise an audio signal and/or a control signal and/or an information signal.

In an embodiment, the one or more processors are configured to combine the first filtered output signal with the first input signal by subtracting the first filtered output signal from the first input signal.

In an embodiment the one or more processors are configured to combine the second filtered output signal with the first filtered output signal by subtracting the first filtered output signal from the second filtered output signal.

In an embodiment, the one or more processors are configured to update the one or more first filter coefficients to minimize the update signal.

In an embodiment the second filter is configured to beamform the second filter input signal to attenuate the near-end sound.

In an embodiment the second filter is configured as a distortionless beamformer with regard to an acoustic echo caused by the first sound being output.

The input interface may comprise a directional microphone system adapted to spatially filter sounds from the environment, and thereby enhance a target acoustic source among a multitude of acoustic sources in the local environment of the user wearing the hearing device. The directional system may be adapted to detect, such as adaptively detect, from which direction a particular part of the microphone signal originates. In hearing devices, a microphone array beamformer is often used for spatially attenuating background noise sources. The beamformer may comprise a linear constraint minimum variance (LCMV) beamformer. Many beamformer variants can be found in literature. The minimum variance distortionless response (MVDR) beamformer is widely used in microphone array signal processing. Ideally the MVDR beamformer keeps the signals from the target direction unchanged, while attenuating sound signals from other directions maximally. The generalized sidelobe canceller GSC structure is an equivalent representation of the MVDR beamformer offering computational and numerical advantages over a direct implementation in its original form.

The second filter may be configured based on knowing the position of the output interface relative to the input interface. The second filter may be configured as an MVDR or MPDR beamformer using GSC structure. The second filter may be configured as a distortionless beamformer with a target direction towards the output interface. The second filter may be configured as a distortionless beamformer configured to cancel near-end speech and noise.

In an embodiment the second filter is configured as an adaptive beamformer.

In the present context an adaptive beamformer may be understood as a beamformer adapting to changes in the signal to be beamformed, e.g., by determining beamforming weights based on the signals to be beamformed.

In an embodiment the second filter is configured as a static beamformer.

In the present context an adaptive beamformer may be understood as a beamformer which does not adapt to changes in the signal to be beamformed, e.g., by fixing the beamforming weights.

In an embodiment the one or more processors are configured to filter using a third filter a third filter input signal to provide a third filtered signal. The third filter input signal is based on the first filtered signal. The third filter is configured to correct a misalignment between the second filtered output signal and the first input signal. The one or more processors are configured to combine the first filtered output signal with the first input signal to provide the first output signal. The first filtered output signal is based on the third filtered signal.

The misalignment between the second filtered output signal and the first input signal may occur as a result of attenuating the near-end sound in the second filter input signal. The misalignment may come in the form of phase and/or an amplitude misalignment, e.g., in the process of attenuating near-end sounds several phase changes may be applied to the second filter input signal to achieve the second filtered output signal. The misalignment may happen due to the second filter introducing a misalignment caused by processing applied to the second filter input signal.

In an embodiment the third filter is configured to correct the misalignment between the second filtered signal and the first input signal by applying a complex valued gain to the third filter input signal.

In an embodiment, the one or more processors are configured to update one or more third filter coefficients of the third filter based on the first output signal.

In an embodiment, the one or more processors are configured to update the one or more third filter coefficients to minimize the first output signal.

The first output signal may be viewed as an error signal for the third filter. The one or more processors may be configured to update one or more third filter coefficients of the third filter by minimizing the first output signal. The one or more processors may be configured to update one or more third filter coefficients by utilizing one or more of the following algorithms LMS, NLMS, or RLS.

In an embodiment the one or more processors are configured to filter using a fourth filter a fourth filter input signal to provide a fourth filtered signal. The fourth filter input signal is based on the far-end signal. The fourth filter is configured to estimate an echo resulting from the first sound in the first input signal. The one or more processors are configured to combine a fourth filtered output signal with the first input signal to provide a second output signal. The fourth filtered output signal is based on the fourth filtered signal. The one or more processors are configured to update one or more fourth filter coefficients of the fourth filter based on the second output signal. The one or more processors are configured to determine a first audio quality parameter based on the first output signal. The one or more processors are configured to determine a second audio quality parameter based on the second output signal. The one or more processors are configured to output, based on the first audio quality parameter and the second audio quality parameter, a third output signal.

The fourth filter may estimate the echo resulting from the first sound in the first input signal by estimating how the far-end signal is modulated by the near-end environment before it is picked up by the input interface. The fourth filter may estimate the echo resulting from the first sound in the first input signal by estimating an acoustical transfer function between the output interface and the input interface. The filtering performed by the fourth filter may comprise convolving the fourth filter input signal or a processed version of the fourth filter input signal with an estimated acoustic transfer function. The filtering performed by the fourth filter may comprise combining the fourth filter input signal with the estimated acoustic transfer function. The filtering of the fourth filter input signal results in the fourth filtered signal.

The fourth filter input signal may be the far-end signal. The fourth filter input signal may be a processed version of the far-end signal. The fourth filter input signal may be an up sampled or down sampled version of the far-end signal.

In an embodiment the fourth filter is configured to estimate the acoustic transfer function from the output interface to the input interface.

The fourth filtered output signal may be viewed as an estimate of the transformed first sound obtained by the input interface.

The fourth filter may be configured to attenuate or amplify specific frequency components of the fourth filter input signal, alter its phase characteristics, or modify its spatial distribution. The fourth filter can be implemented using various techniques, such as mechanical structures, electronic circuits, or digital signal processing algorithms.

The first audio quality parameter may be one or more of a non-intrusive speech quality parameter, such as PESQ or ERLE, a signal to noise ratio, or a MOS score.

The second audio quality parameter may be one or more of non-intrusive speech quality parameter, such as PESQ or ERLE, a signal to noise ratio, or a MOS score.

The first audio quality parameter may be the same type of audio quality parameter as the second audio quality parameter to facilitate comparison between the two.

The third output signal may be the first output signal, the second output signal or a mixture of the first output signal and second output signal. The one or more processors may be configured to output the signal associated with the highest audio quality parameter, e.g., if the first output signal has a higher signal to noise ratio than the second output signal, then the one or more processors may output only the first output signal. The one or more processors may be configured to output a mixture of the first output signal and the second output signal, where the mixture between the first output signal and the second output signal is dependent based their respective first audio parameter. For example, the third output signal may be a linear combination of the first output signal and the second output signal weighted by their respective audio quality parameter.

In an embodiment the the one or more processors are configured to combine the second filtered output signal with a third input signal to provide the first input signal.

Ther third input signal may be an audio signal from the plurality of input audio signals. The third input signal may be a reference microphone signal from the plurality of input audio signals.

According to a second aspect of the present disclosure a method of operating a hearing device is provided. The hearing device comprises an output interface configured to output a first sound to a user of the hearing device based on a far-end signal. The hearing device comprises an input interface configured to provide a plurality of input audio signals indicative of the first sound and a near-end sound. The method comprises receiving a plurality of input audio signals. The method comprises receiving a far-end signal. The method comprises filtering a first filter input signal to provide a first filtered signal. The first filter input signal is based on the far-end signal. Filtering of the first filter input signal comprises estimating an echo resulting from the first sound in a first input signal. The first input signal is based on the plurality of input audio signals. The method comprises combining a first filtered output signal with a first input signal to provide a first output signal. The first filtered output signal is based on the first filtered signal. The first input signal is based on the plurality of input audio signals. The method comprises filtering a second filter input signal to provide a second filtered signal. The second filter input signal is based on the plurality of input audio signals. Filtering the second filter input signal comprises attenuating the near-end sound. The comprises combining the second filtered output signal with the first filtered output signal to provide an update signal. The second filtered output signal is based on the second filtered signal. The method comprises updating one or more first filter coefficients of the first filter based on the update signal.

According to a third aspect of the present disclosure, use of a hearing device as claimed according to a first aspect of the invention is provided.

According to fourth aspect of the present disclosure, a data processing system comprising a processor and program code means for causing the processor to perform the method according to the second aspect is provided.

According to fifth aspect of the present disclosure, a computer program comprising instructions which, when the program is executed by a computer, cause the computer to carry out the method according to the second aspect is provided.

It is intended that some or all the structural features of the hearing device described above, in the 'detailed description of embodiments' or in the claims can be combined with embodiments of the method, when appropriately substituted by a corresponding process and vice versa. It is intended that some or all the processing performed by the hearing device as described in relation to the first aspect, in the 'detailed description of embodiments' or in the claims can be combined with embodiments of the method, when appropriately substituted by a corresponding process and vice versa. Embodiments of the method have the same advantages as the corresponding device.

In the present context, a hearing device, e.g. a hearing instrument, refers to a device, which is adapted to improve, augment and/or protect the hearing capability of a user by receiving acoustic signals from the user's surroundings, generating corresponding audio signals, possibly modifying the audio signals and providing the possibly modified audio signals as audible signals to at least one of the user's ears. Such audible signals may e.g. be provided in the form of acoustic signals radiated into the user's outer ears and/or acoustic signals transferred as mechanical vibrations to the user's inner ears through the bone structure of the user's head and/or through parts of the middle ear.

A hearing device may be adapted to a particular user's needs, e.g. a hearing impairment. A configurable signal processing circuit of the hearing device may be adapted to apply a frequency and level dependent compressive amplification of an input signal. A customized frequency and level dependent gain (amplification or compression) may be determined in a fitting process by a fitting system based on a user's hearing data, e.g. an audiogram, using a fitting rationale (e.g. adapted to speech). The frequency and level dependent gain may e.g. be embodied in processing parameters, e.g. uploaded to the hearing device via an interface to a programming device (fitting system) and used by a processing algorithm executed by the configurable signal processing circuit of the hearing device.

The invention is set out in the appended set of claims.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
FIG. 1 shows a block diagram of an active echo canceller system according to a first embodiment of the present disclosure,
FIG. 2 shows a block diagram of an active echo canceller system according to a second embodiment of the present disclosure,
FIG. 3 shows a block diagram of an active echo canceller system according to a third embodiment of the present disclosure, and
FIG. 4 shows a block diagram of an active echo canceller system according to a fourth embodiment of the present disclosure,

The figures are schematic and simplified for clarity, and they just show details which are essential to the understanding of the disclosure, while other details are left out. Throughout, the same reference signs are used for identical or corresponding parts.

Further scope of applicability of the present disclosure will become apparent from the detailed description given hereinafter. However, it should be understood that the detailed description and specific examples, while indicating preferred embodiments of the disclosure, are given by way of illustration only. Other embodiments may become apparent to those skilled in the art from the following detailed description.

### DETAILED DESCRIPTION OF EMBODIMENTS

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof.

The electronic hardware may include micro-electronic-mechanical systems (MEMS), integrated circuits (e.g. application specific), microprocessors, microcontrollers, digital signal processors (DSPs), field programmable gate arrays (FPGAs), programmable logic devices (PLDs), gated logic, discrete hardware circuits, printed circuit boards (PCB) (e.g. flexible PCBs), and other suitable hardware configured to perform the various functionality described throughout this disclosure, e.g. sensors, e.g. for sensing and/or registering physical properties of the environment, the device, the user, etc. Computer program shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

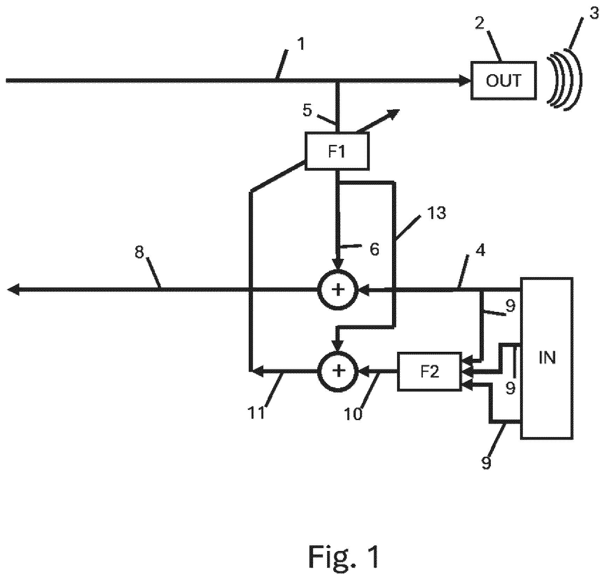

FIG. 1 shows a block diagram of an active echo canceller system according to a first embodiment of the present disclosure. The active echo canceller system may be implemented in a hearing device, not shown. The active echo canceller system comprises an output interface OUT configured to output sound. The output interface OUT may comprise one or more output transducers for outputting sound, such as one or more loudspeakers. The output interface OUT is configured to output a first sound 3 to a user of the hearing device based on a far-end signal 1. The far-end signal 1 may be received by a wired or a wireless connection to a far-end device. The active echo canceller system comprises an input interface IN. The input interface IN may comprise a plurality of microphones, e.g., in the form of a microphone array. The input interface IN is configured to provide audio signals. The input interface IN is configured to provide a plurality of input audio signals 9 indicative of the first sound 3 and a near-end sound. The input audio signals 9 provided by the input interface IN may be a mix of the first sound 3 having undergone modulation due to travelling from the output interface OUT to the input interface IN and sounds originating from the environment in which the active canceller system is placed.

The active echo canceller system comprises one or more processors. The one or more processors are configured to process audio signals. The one or more processors may be arranged in communicative connection with the input interface IN and the output interface OUT. The one or more processors are configured to receive the plurality of input audio signals 9. The one or more processors may receive the plurality of input audio signals 9 from the input interface IN. The one or more processors are configured to receive the far-end signal 1. The one or more processors may receive the far-end signal via a wired or a wireless connection to a far-end device. The one or more processors are configured to filter using a first filter F1 a first filter input signal 5 to provide a first filtered signal 13. The first filter input signal 5 is based on the far-end signal 1. The first filter input signal 5 may be the far-end signal 1 or a processed version of the far-end signal 1. The first filter F1 is configured to estimate an echo resulting from the first sound 3 in a first input signal 4. The first filter F1 may be configured to estimate the echo by estimating a transfer function expressing the modulation first sound will undergo before being picked up by the input interface IN. The first filter F1 is an adaptive filter which is configured to adaptively estimate an echo in the first input signal 4. The first input signal 4 is based on the plurality of input audio signals 9. The first input signal 4 may be one signal from the plurality of input audio signals 9. The first input signal 4 may be a signal resulting from processing the plurality of input audio signals 9. The one or more processors may be configured to combine a first filtered output signal 6 with the first input signal 4 to provide a first output signal 8. The first filtered output signal 6 is based on the first filtered signal 13. The first filtered output signal 6 may be the first filtered signal 13 or a processed version thereof. The one or more processors may combine the first filtered output signal 6 with the first input signal 4 by subtracting the first filtered output signal 6 from the first input signal 4. The first output signal 8 may be a signal meant to be transmitted to a far-end device. The first output signal 8 may undergo further processing, such as noise reduction, and/or speech enhancement. The one or more processors are configured to filter using a second filter F2 a second filter input signal 9 to provide a second filtered signal 10. The second filter input signal 9 is based on the plurality of input audio signals 9. The second filter input signal 9 may be the plurality of input audio signal 9 or a processed version thereof. The second filter F2 is configured to attenuate the near-end sound in the second filter input signal 9. The one or more processors are configured to combine the second filtered output signal 10 with the first filtered output signal 13 to provide an update signal 11. The second filtered output signal 10 is based on the second filtered signal 10. The second filtered output signal 10 may be the second filtered signal 10 or a processed version thereof. The one or more processors are configured to update one or more first filter coefficients of the first filter F1 based on the update signal 11.

The second filter F2 may be configured to beamform the second filter input signal to attenuate the near-end sound. The second filter F2 may be configured as a distortionless beamformer with regard to an acoustic echo caused by the first sound being output. The second filter may be configured as an adaptive beamformer. The second filter may be configured as a static beamformer. The one or more processors may be configured to combine the second filtered output signal with the first filtered output signal by subtracting the first filtered output signal from the second filtered output signal. The one or more processors may be configured to update the one or more first filter coefficients to minimize the update signal.

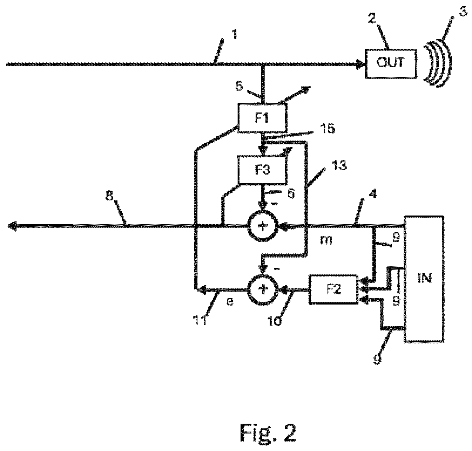

Referring to figure 2 which shows a block diagram of an active echo canceller system according to a second embodiment of the present disclosure. The second embodiment is similar to the first embodiment and comprises the same features as the first embodiment. The second embodiment further comprises a third filter F3. The one or more processors are configured to filter a third filter input signal 15 to provide a third filtered signal 6 using the third filter F3. The third filter input signal 6 is based on the first filtered signal 13. The third filter input signal 6 may be the first filtered signal 13 or a processed version thereof. The third filter F3 is configured to correct a misalignment between the second filtered output signal 10 and the first input signal 4. The misalignment may have occurred due to processing performed by the second filter F2. The one or more processors are configured to combine the first filtered output signal 6 with the first input signal 4 to provide the first output signal 8. In the shown second embodiment, the first filtered output signal 6 is based on the third filtered signal 6. The first filtered output signal 6 may be the third filtered signal 6 or a processed version thereof. The third filter F3 may be configured to correct the misalignment by a by applying a complex valued gain to the third filter input signal 15. In the embodiment shown the third filter F3 is an adaptive filter. However, the third filter F3 may alternatively be a non-adaptive filter. The one or more processors are configured to update one or more third filter coefficients of the third filter F3 based on the first output signal 8. The one or more processors may be configured to update the one or more third filter coefficients to minimize the first output signal 8, i.e., by treating the first output signal 8 as an error signal to be minimized.

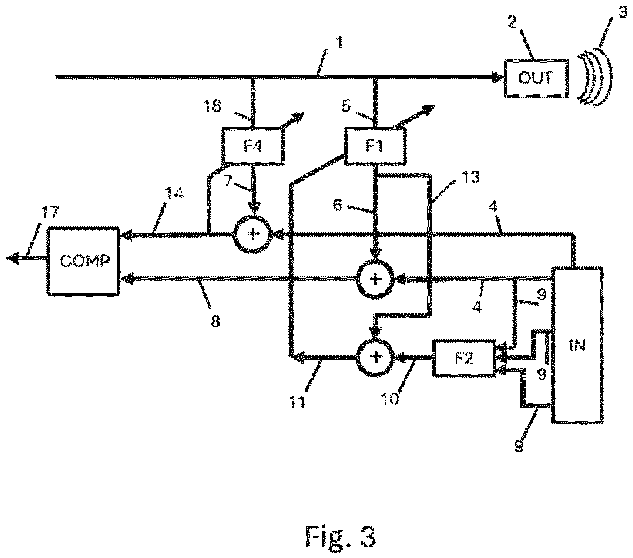

Referring to figure 3 which shows a block diagram of an active echo canceller system according to a third embodiment of the present disclosure. The third embodiment is similar to the first embodiment and comprises the same features as the first embodiment. The third embodiment further comprises a fourth filter F4. The one or more ' The fourth filter input signal 18 may be the far-end signal or a processed version thereof. The fourth filter F4 is configured to estimate an echo resulting from the first sound 3 in the first input signal 4. The one or more processors are configured to combine a fourth filtered output signal 7 with the first input signal 4 to provide a second output signal 14. The fourth filtered output signal 7 is based on the fourth filtered signal 7. The fourth filtered output signal 7 may be the fourth filtered signal 7 or a processed version thereof. The one or more processors are configured to update one or more fourth filter coefficients of the fourth filter F4 based on the second output signal 14. The one or more processors are configured to determine a first audio quality parameter based on the first output signal 8. The one or more processors are configured to determine a second audio quality parameter based on the second output signal 14. The one or more processors are configured to compare the first audio quality parameter with the second audio quality parameter. The one or more processors are configured to output, based on the comparison between the first audio quality parameter and the second audio quality parameter, a third output signal 17.

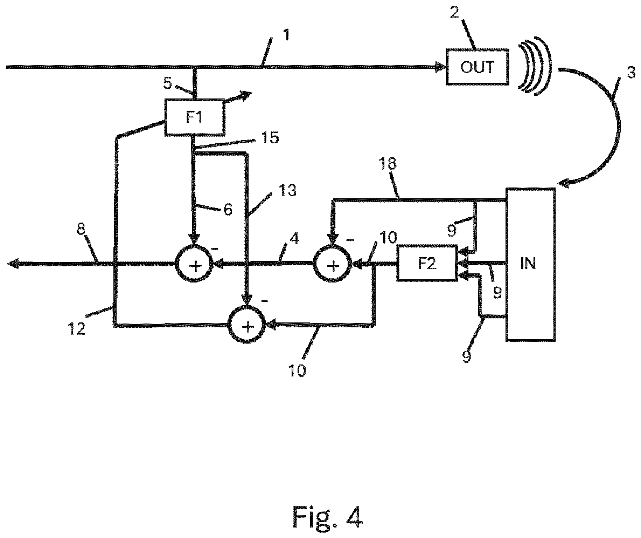

Referring to figure 4 which shows a block diagram of an active echo canceller system according to a fourth embodiment of the present disclosure. The fourth embodiment is similar to the first embodiment and comprises the same features as the first embodiment. The one or more processors are configured to combine the second filtered output signal 10 with a third input signal to provide the first input signal 4. The third input signal may be an audio signal from the plurality of input audio signals. The third input signal may be a reference microphone signal from the plurality of input audio signals.

The active echo canceller system shown in Figs 1-4 may be implemented in a wide variety of different hearing devices, such as a headset, video bar, or a speakerphone.

It is intended that the structural features of the devices described above, either in the detailed description and/or in the claims, may be combined with the method, when appropriately substituted by a corresponding process.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure, or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art.

The claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more.

## Claims

1. A hearing device comprising:
an output interface configured to output a first sound to a user of the hearing device based on a far-end signal,
an input interface configured to provide a plurality of input audio signals indicative of the first sound and a near-end sound,
one or more processors configured to:
receive the plurality of input audio signals,
receive the far-end signal,
filter using a first filter a first filter input signal to provide a first filtered signal, wherein the first filter input signal is based on the far-end signal, wherein the first filter is configured to estimate an echo signal resulting from the first sound in a first input signal, wherein the first input signal is based on the plurality of input audio signals,
combine a first filtered output signal with the first input signal to provide a first output signal, wherein the first filtered output signal is based on the first filtered signal,
filter using a second filter a second filter input signal to provide a second filtered signal, wherein the second filter input signal is based on the plurality of input audio signals, wherein the second filter is configured to attenuate the near-end sound,
combine the second filtered output signal with the first filtered output signal to provide an update signal, wherein the second filtered output signal is based on the second filtered signal,
update one or more first filter coefficients of the first filter based on the update signal.

2. A hearing device according to claim 1, wherein the one or more processors are configured to combine the first filtered output signal with the first input signal by subtracting the first filtered output signal from the first input signal.

3. A hearing device according to any of the preceding claims, wherein the second filter is configured to beamform the second filter input signal to attenuate the near-end sound,

4. A hearing device according to claim 3, wherein the second filter is configured as a distortionless beamformer with regard to an acoustic echo caused by the first sound being output.

5. A hearing device according to any of claims 3 or 4, wherein the second filter is configured as an adaptive beamformer.

6. A hearing device according to any of claims 3 or 4, wherein the second filter is configured as a static beamformer.

7. A hearing device according to any of the preceding claims, wherein the one or more processors are configured to combine the second filtered output signal with the first filtered output signal by subtracting the first filtered output signal from the second filtered output signal.

8. A hearing device according to any of the preceding claims, wherein the one or more processors are configured to update the one or more first filter coefficients to minimize the update signal.

9. A hearing device according to any of the preceding claims, wherein the one or more processors are configured to
filter using a third filter a third filter input signal to provide a third filtered signal, wherein the third filter input signal is based on the first filtered signal, wherein the third filter is configured to correct a misalignment between the second filtered output signal and the first input signal,
combine the first filtered output signal with the first input signal to provide the first output signal, wherein the first filtered output signal is based on the third filtered signal.

10. A hearing device according to claim 9, wherein the third filter is configured to correct the misalignment between the second filtered signal and the first input signal by applying a complex valued gain to the third filter input signal.

11. A hearing device according to claim 9 or 10, wherein the one or more processors are configured to update one or more third filter coefficients of the third filter based on the first output signal.

12. A hearing device according to claim 11, wherein the one or more processors are configured to update the one or more third filter coefficients to minimize the first output signal.

13. A hearing device according to any of the preceding claims, wherein the one or more processors are configured to:
filter using a fourth filter a fourth filter input signal to provide a fourth filtered signal, wherein the fourth filter input signal is based on the far-end signal, wherein the fourth filter is configured to estimate an echo resulting from the first sound in the first input signal,
combine a fourth filtered output signal with the first input signal to provide a second output signal, wherein the fourth filtered output signal is based on the fourth filtered signal,
update one or more fourth filter coefficients of the fourth filter based on the second output signal,
determine a first audio quality parameter based on the first output signal,
determine a second audio quality parameter based on the second output signal,
output, based on the first audio quality parameter and the second audio quality parameter, a third output signal.

14. A hearing device according to any of the preceding claims, wherein the hearing device is a headset, video bar, a hearing aid, or a speakerphone.

15. A method of operating a hearing device comprising an output interface configured to output a first sound to a user of the hearing device based on a far-end signal, an input interface configured to provide a plurality of input audio signals indicative of the first sound and a near-end sound, the method comprising:
receiving a plurality of input audio signals,
receiving a far-end signal,
filtering a first filter input signal to provide a first filtered signal, wherein the first filter input signal is based on the far-end signal, wherein filtering the first filter input signal comprises applying an estimate of an acoustic transfer function from the output interface to the input interface to the first filter input signal,
combining a first filtered output signal with a first input signal to provide a first output signal, wherein the first filtered output signal is based on the first filtered signal, and wherein the first input signal is based on the plurality of input audio signals,
filtering a second filter input signal to provide a second filtered signal, wherein the second filter input signal is based on the plurality of input audio signals, wherein filtering the second filter input signal comprises attenuating the near-end sound,
combine the second filtered output signal with the first filtered output signal to provide an update signal, wherein the second filtered output signal is based on the second filtered signal,
updating one or more first filter coefficients of the first filter based on the update signal.
